# FASCICULE DE BREVET EUROPEEN

(11) **EP 0 685 305 B1**
(45) Date de publication et mention de la délivrance du brevet: **31.03.1999**
(21) Numéro de dépôt: 95107829.4
(22) Date de dépôt: 23.05.1995
(51) Int. Cl.: B26D 7/24

(54) **Dispositif de sécurité dans une presse à platine de traitement d'éléments en plaque**
Sicherheitsvorrichtung für eine Plattenpresse zur Verarbeitung von plattenförmigen Elementen
Safety device for a platen press used in the treatment of plate elements

(30) Priorité: 24.05.1994 CH 1592/94
(43) Date de publication de la demande: 06.12.1995
(73) Titulaire: BOBST S.A., 1001 Lausanne (CH)
(72) Inventeur: Pfeiffer, Hakan, CH-1185 Mont-sur-Rolle (CH)
(74) Mandataire: Colomb, Claude

(56) Documents cités:
- BE-A- 690 657
- DE-A- 3 134 789
- FR-A- 2 439 634
- GB-A- 847 810
- US-A- 4 627 253

## Description

La présente invention est relative à un dispositif de sécurité évitant l'écrasement d'une barre de pinces dans une presse à platine de traitement d'éléments en plaque, tels que des feuilles de papier ou de carton.
Une telle machine de traitement comprend usuellement d'abord une station d'introduction dans laquelle est installée une pile de feuilles, chaque feuille étant successivement enlevée du dessus de la pile pour être envoyée sur une table de marge. Sur cette table, chaque feuille est mise en position contre des taquets avant et latéraux avant d'être saisie en son bord frontal par une série de pinces montées le long d'une barre transversale, dont chaque extrémité est attachée à un train de chaînes latérales emmenant la barre, donc la feuille, dans les stations suivantes de traitement. Les stations de traitement peuvent être une presse à platine de découpage, cette dernière étant suivie d'une station d'éjection des déchets. Ces stations de traitement sont suivies d'une station de réception dans laquelle chaque feuille relâchée par les pinces est taquée en tombant sur le dessus d'une pile s'accumulant sur une palette de sortie.

Une presse à platine utilisée dans de telles machines comprend normalement un sommier inférieur levé lors de chaque cycle de machine jusqu'à ce que sa surface supérieure plane vienne appliquer une pression sur un marbre plan solidaire d'un sommier supérieur fixe encastré de chaque côté dans le bâti de la station. Ce sommier mobile est usuellement levé en quatre points, chacun par une genouillère animée par une bielle reliée a un même vilebrequin. Ce vilebrequin est lui même entraîné par une roue dentée verticale engrenée avec une vis sans fin ménagée sur un arbre rotatif horizontal inférieur relié, en l'une de ses extrémités, à un volant d'inertie entraîné par un moteur, par exemple au moyen de courroies.

Comme on peut aisément le comprendre, un cycle de machine correspond à un tour complet du vilebrequin impliquant une montée et une descente du sommier inférieur; et il est alors commode de quantifier les instants et les délais de ce cycle en "angle machine" θ compris entre 0 et 360 degrés pour établir des relations avec les positions successives de chacun des organes de la presse et/ou de la barre de pinces, et ce de manière indépendante de la cadence finale de production. Par exemple, le point mort haut "θpmh" et le point mort bas "θpmb" du sommier inférieur correspondent respectivement à des angles de 50 et 230 degrés du vilebrequin, alors que l'angle "θsor" de sortie de la barre de pinces hors de la platine, peu avant son arrêt pour le positionnement de la feuille dans cette platine, correspond à un angle de 298 degrés.

Lors d'une production, il peut arriver qu'une feuille ne soit pas bien prise par les pinces, ou que deux feuilles soient simultanément prises, ou que l'une d'entre elles se casse, ce qui provoque toujours à terme une accumulation de feuilles, autrement appelée "bourrage", dans l'une des stations de la machine. L'apparition d'un tel bourrage se traduit immédiatement par une surtension sur le train de chaînes des barres de pinces. Un accouplement de sécurité installé dans l'entraînement de ce train de chaînes s'ouvre rapidement et provoque l'arrêt des chaînes puis de la machine.

Si un bourrage se produit au moment où la barre de pinces entre dans la presse alors que le sommier inférieur est proche de son point mort bas, l'arrêt général de la machine est suffisamment rapide pour que ce sommier inférieur ne puisse plus remonter.

A l'inverse, si un tel bourrage survient alors que la barre de pinces est juste sur le point de quitter la presse, le sommier inférieur étant lancé vers son point mort haut, la barre de pinces risque de s'arrêter encore dans la presse sans que l'on puisse stopper à temps le sommier inférieur qui vient alors écraser cette barre contre le sommier supérieur. Avant de pouvoir relancer la machine, il est alors nécessaire de d'abord changer la barre endommagée, ce qui allonge sensiblement le temps mort d'inutilisation de la machine.

Pour éviter ce type d'accident, un dispositif de sécurité particulier est installé dans la presse à platine pour freiner d'urgence ce sommier inférieur. Le dispositif actuellement utilisé comprend un capteur dans l'accouplement de sécurité de l'entraînement du train de chaînes qui détecte une ouverture d'urgence. Ce capteur transmet alors un signal à un dispositif de commutation qui déclenche un frein installé dans l'entraînement du vilebrequin de la presse, par exemple des mâchoires se fermant sur l'arbre de la vis sans fin, sur le volant d'inerte ou sur un disque spécialement monté parallèlement à ce volant. Un tel dispositif est décrit en partie dans le brevet GB-1372716.

On connaît également, dans les machines transfert pour usiner des pièces mécaniques lourdes, un dispositif de sécurité utilisant des encodeurs linéaires absolus ayant pour but de déterminer, par lecture, la position exacte des pièces à traiter. Pour ce faire, on utilise des encodeurs qui, dans une plage donnée par la course des moteurs d'entraînement commandant le déplacement des pièces, vont lire une valeur de position codée de chaque pièce se déplaçant.

Ainsi, la réponse fournie par les encodeurs est constituée d'une valeur de lecture résultant d'une mesure. Un tel dispositif de sécurité est décrit dans le brevet US-A-4 627 253. Dans ce document, les emplacements occupés par les encodeurs, par rapport au chemin de défilement des pièces, n'ont aucune incidence sur les lectures effectuées par les encodeurs.

Pour déclencher un arrêt d'urgence de la presse, le dispositif du document précité utilise un contrôleur de défaut établissant, par calcul, des comparaisons entre chaque position détectée des pièces à travailler.

Dans ce contexte, le contrôleur de défaut décrit dans ce document établi le plus de fois possible l'écart résiduel entre les deux positions théoriques et réelles des pièces. Ainsi, les contrôles de défaut de positionnement sont calculés un grand nombre de fois par seconde.

Fonctionnant à satisfaction dans certaines presses, on constate toutefois que ce dispositif de sécurité devient inadéquat pour d'autres presses dès que l'on modifie un tant soit peu la configuration ou la course du sommier, ou les éléments d'entraînement ou les organes de freinage.

Le but de la présente invention est un dispositif de sécurité au sein d'une presse à platine comprenant un capteur de situation d'urgence basculant un commutateur d'un dispositif de freinage installé dans l'entraînement du sommier inférieur qui soit plus fiable, notamment par un délai de contre-réaction sensiblement plus court.

Ce but est réalisé par un dispositif de sécurité évitant l'écrasement d'une barre de pinces dans une presse à platine de traitement d'éléments en plaque, cette presse à platine comportant un sommier supérieur fixe et un sommier inférieur mobile levé cycliquement par un dispositif d'entraînement, ce dispositif de sécurité comprenant un capteur de situation d'urgence composé d'un circuit comparateur relié électriquement à une cellule de lecture, ledit circuit comparateur recevant par ailleurs une indiquation relative à la position du sommier inférieur mobile, ledit circuit comparateur étant agencé pour faire basculer un commutateur d'un dispositif de freinage d'urgence, installé dans l'entraînement du sommier inférieur mobile, la cellule est une cellule de lecture directe qui détecte le passage de la barre de pinces au niveau de la sortie de la presse, de telle sorte que le commutateur soit basculé en cas d'absence de la détection du passage de la barre de pinces à la sortie de la presse, par la cellule de lecture directe, à l'instant où le sommier inférieur mobile se trouve dans une position prédéterminée lors de son mouvement en direction de son point mort haut (PMH).

Dans l'un des modes de réalisation, la cellule de lecture directe est un capteur inductif de proximité de masse métallique réagissant au passage, dans son voisinage, de la masse métallique constituée par l'attache de la barre de pince à la chaîne.

Dans un autre mode de réalisation, la cellule de lecture directe est placée au lieu normal de passage de la barre de pince à l'instant angulaire "θlect" précédant l'instant angulaire "θecra" correspondant au moment où l'écart de hauteur entre les deux sommiers de la presse à platine devient inférieur à l'épaisseur de la barre de pinces, et ce d'un délai égal à la somme du délai "Dcommut" de réaction du commutateur et du délai "Dfrein" de freinage du sommier inférieur mobile jusqu'à arrêt complet de celui-ci par son dispositif de freinage d'urgence.

Grâce à cette cellule à réaction instantanée judicieusement positionnée, il n'est plus nécessaire de tenir compte d'un délai angulaire d'attente "Ddetec" entre l'arrêt accidentel de la barre de pinces et la détection de cette condition tout à l'arrière de la machine au niveau de l'accouplement de sécurité situé dans l'entraînement du train de chaînes.

Ce capteur peut être une cellule photoélectrique recevant une réflexion par la barre d'une source lumineuse, ou peut être un interrupteur mécanique dont le doigt est poussé par le passage de la barre. Toutefois, pour des considérations de fiabilité et de coûts, la cellule est de préférence un capteur inductif réagissant au passage dans son voisinage de la masse métallique constitué par l'attache de la barre de pinces à la chaîne.

Dans un mode de réalisation préféré, la cellule de lecture est placée au lieu normal de passage de la barre de pince à l'instant angulaire "θlect" précédant l'instant angulaire "θecra" correspondant au moment où l'écart de hauteur entre les deux sommiers de la presse devient inférieur à l'épaisseur de la barre, et ce d'un délai égal à la somme du délai "Dcommut" de réaction du commutateur et du délai "Dfrein" de freinage du sommier inférieur jusqu'à arrêt complet de celui-ci par son dispositif de freinage d'urgence.

En d'autres termes, la cellule de lecture de la barre de pince ayant une réaction instantanée, on peut ne déclencher le freinage d'urgence du sommier inférieur que le plus tard possible tout en évitant tout risque d'écrasement : c'est-à-dire si et seulement si la barre de pinces n'est toujours pas passée alors qu'il ne reste plus que le délai minimum d'arrêt du sommier inférieur avant que celui-ci ne commence à toucher cette barre. Cette lecture "le plus tard possible" permet de rapprocher d'autant cette cellule de la sortie de la presse, et ne laisse plus qu'une zone minime de risque dans laquelle un arrêt de barre est encore fatal.

Bien évidemment, l'instant angulaire "θsor" de sortie de la barre de pinces hors de la platine est par définition antérieur à l'instant angulaire "θecra" d'écrasement de la barre exprimant le fait qu'on laisse normalement sortir la barre de pinces avant de traiter l'élément en plaque. Utilement alors, le commutateur et le dispositif de freinage du sommier inférieur sont optimisés de telle sorte que la somme de leur délais de réaction "Dcommut + Dfrein" soit inférieur au délai compris entre les instants "θecra - θsor". Dans ce cas, la cellule peut être située à la sortie juste en dehors de la presse, et une lecture de passage confirme la sortie effective de la barre de pinces.

L'invention sera mieux comprise à l'étude d'un mode de réalisation pris à titre nullement limitatif et illustré par les figures annexées, dans lesquelles :
- la figure 1 est une vue schématique de côté d'une presse à platine avec un dispositif d'arrêt d'urgence selon l'état de la technique et selon l'invention, et
- la figure 2 est un diagramme schématique du déplacement H du sommier inférieur en fonction de l'angle machine θ.

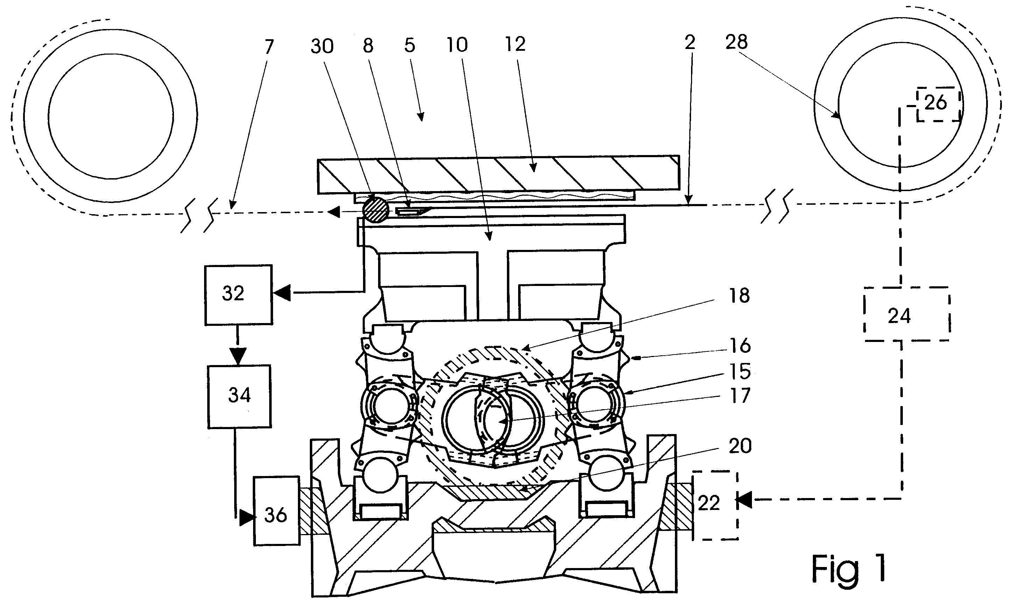

Sur la figure 1 est illustrée une presse à platine 5 comprenant un sommier supérieur horizontal fixe 12 et un sommier inférieur horizontal 10 mobile en translation verticale. Lorsque le sommier inférieur est en position basse, une feuille de papier ou de carton 2 est amenée entre ces deux sommiers par une barre de pinces 8 entraînée par un train de chaînes 7. La face inférieure du sommier fixe 12 comprend une pluralité de couteaux ou un cliché d'impression contre lesquels le sommier inférieur mobile 10 vient presser la feuille 2 en fin de course haute.

Comme illustré, ce sommier inférieur 10 est animé par quatre genouillères 16 qui sont cycliquement pliées par des bielles 15 toutes reliées à un même vilebrequin central 17. Ce vilebrequin 17 est entraîné en rotation par une roue dentée verticale 18 elle-même engrenée par une vis sans fin inférieure horizontale appartenant à un dispositif d'entraînement 20.

Ces machines de traitement de feuilles tournant à hautes cadences, un incident lors du traitement de l'une d'entre elles impliquant une déchirure ou un coincement provoque très rapidement une accumulation des feuilles suivantes et un blocage de la machine. Ce bourrage se traduit quasi-instantanément par une surtension sur le train de chaînes 7 ce qui déclenche l'ouverture d'un accouplement élastique de sécurité 28 installé dans le dispositif d'entraînement de l'une des roues dentées amont ou aval de mise en mouvement de ce train de chaînes. Une barre de pinces 8 peut ainsi se retrouver arrêtée entre les sommiers inférieur 10 et supérieur 12 et risque fort d'être écrasée lors de la fermeture de cette presse.

Pour éviter un tel écrasement, il est actuellement prévu un dispositif de sécurité comprenant un premier interrupteur 26 monté sur l'accouplement élastique de sécurité 28 et basculant immédiatement avec l'ouverture de celui-ci. Le signal issu de cet interrupteur 26 déclenche l'ouverture d'un commutateur 24 d'une énergie électrique, hydraulique ou pneumatique qui est appliquée sur un frein d'urgence 22 monté dans le dispositif d'entraînement à vis sans fin 20 du sommier inférieur mobile 10.

A l'inverse, le dispositif de sécurité selon l'invention est basé sur une cellule de lecture 30 située à la sortie de la presse 5 et capable de détecter le passage en son voisinage de la barre de pinces 8. Après de nombreux essais, il s'est avéré qu'un capteur inductif sensible au passage de la masse métallique constituée par l'attache de la barre de pinces au train de chaînes est particulièrement performant dans l'environnement particulièrement chaud et poussiéreux de la machine. De plus, un tel capteur n'implique aucun contact mécanique ce qui évite toute usure. Le signal issu de cette cellule 30 est appliqué à un circuit comparateur 32 recevant par ailleurs une indication de la position angulaire du vilebrequin 17. La sortie de ce circuit comparateur 32 est appliquée sur un commutateur 34 pilotant un frein d'urgence 36 semblable au commutateur 24 et au frein 22 décrits précédemment.

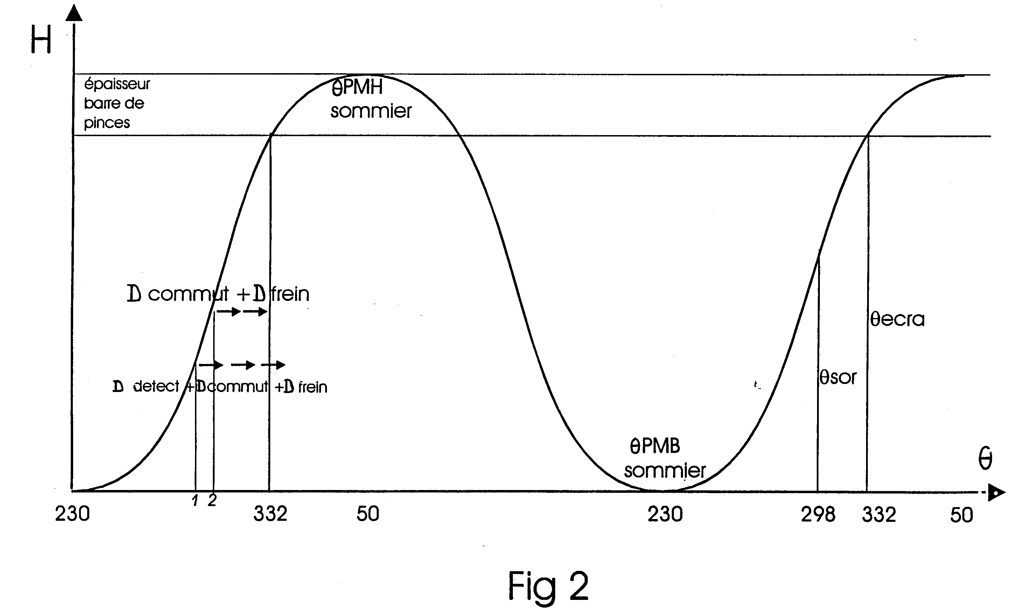

Les avantages de ce dispositif de sécurité selon l'invention seront plus apparents à l'étude de son fonctionnement au vu de la figure 2 représentant la course H du sommier inférieur mobile 10 en fonction de l'angle θ du vilebrequin 17.

Sur ce diagramme, on reconnaît d'abord le Point Mort Haut PMH et le Point Mort Bas PMB du sommier respectivement à 50 et 230 degrés machine. Par ailleurs, le sommier inférieur atteint la cote de la partie inférieure de la barre de pinces, cette cote étant égale au PMH diminué de l'épaisseur de cette barre, environ 80 degrés avant le PMH soit aux alentours de 332 degrés. Cet instant angulaire est dénommé θecra car il correspond au début de l'écrasement d'une barre de pinces encore présente dans la presse à platine. Toutefois, en fonctionnement normal, cette barre de pinces est prévue de sortie hors de la platine bien avant à un instant angulaire θsor de l'ordre de 298 degrés.

Dans l'exemple de l'avènement d'un bourrage à l'instant angulaire "1" dans une presse à platine munie d'un dispositif de sécurité selon l'état de la technique, on constate que l'accumulation du délai θdétect nécessaire au basculement de l'interrupteur 26 au niveau de l'accouplement élastique de sécurité 28 en fin de train de chaînes, plus le délai Dcommut de commutation du circuit 24, et enfin plus le délai de freinage Dfrein par le dispositif de freinage d'urgence 22 est largement supérieur au délai en fait disponible avant que le sommier n'atteigne la barre de pinces qui est donc écrasée pratiquement à pleine vitesse.

A l'inverse, la réaction de la cellule 30 et de son circuit comparateur 32 étant instantanée, celle-ci est située dans la presse à platine 5 à l'endroit où passe la barre de pinces 8 au moment angulaire "2" correspondant au moment angulaire θécra diminué du délai Dcommut de commutation du circuit 34 et du délai Dfrein du dispositif de freinage d'urgence 36.

Alors, si le comparateur constate qu'à l'instant "2" la barre de pinces 7 n'est toujours pas passée devant la cellule 30, il conclut à l'avènement d'un bourrage et déclenche immédiatement le dispositif de freinage d'urgence du sommier inférieur mobile 10 qui s'arrêtera forcément peu avant d'atteindre la barre de pinces 8. Aucun écrasement de barre de pinces n'est donc plus possible.

Surtout, il s'est avéré possible d'optimiser le circuit de commutation 34 et le dispositif de freinage 36, même avec l'énergie la plus lente à savoir l'énergie pneumatique, de telle sorte que ce délai Dcommut + Dfrein soit inférieur au délai de 34 degrés séparant l'instant angulaire θsor et l'instant angulaire θécra. Ceci signifie que la cellule de lecture 30 est située juste en-dehors de la presse a platine 5 directement à sa sortie. On a alors pu éliminer toute zone d'incertitude critique en fin de sortie de platine dans laquelle une barre de pinces arrêtée n'est pas détectée et quand même écrasée.

De nombreuses améliorations peuvent être apportées à ce dispositif de sécurité dans l'étendue définie par les revendications.

## Revendications

1. Dispositif de sécurité évitant l'écrasement d'une barre de pinces (8) dans une presse à platine (5) de traitement d'éléments en plaque, cette presse à platine (5) comportant un sommier supérieur (12) fixe et un sommier inférieur (10) mobile levé cycliquement par un dispositif d'entraînement (15-20), ce dispositif de sécurité comprenant un capteur de situation d'urgence composé d'un circuit comparateur (32) relié électriquement à une cellule de lecture, ledit circuit comparateur (32) recevant par ailleurs une indiquation relative à la position du sommier inférieur (10) mobile, ledit circuit comparateur (32) étant agencé pour faire basculer un commutateur (34) d'un dispositif de freinage d'urgence (36), installé dans l'entraînement (20) du sommier inférieur (10) mobile, caractérisé en ce que la cellule est une cellule de lecture directe (30) détectant le passage de la barre de pince (8) au niveau de la sortie de la presse (5), de telle sorte que le commutateur (34) soit basculé en cas d'absence de la détection du passage de la barre de pinces (8) à la sortie de la presse (5), par la cellule de lecture directe (30), à l'instant où le sommier inférieur (10) mobile se trouve dans une position prédéterminée lors de son mouvement en direction de son point mort haut (PMH).

2. Dispositif de sécurité selon la revendication 1, caractérisé en ce que la cellule de lecture directe (30) est un capteur inductif de proximité de masse métallique.

3. Dispositif de sécurité selon la revendication 1, caractérisé en ce que la cellule de lecture directe (30) est placée au lieu normal de passage de la barre de pince (8) à l'instant angulaire "θlect" précédant l'instant angulaire "θecra" correspondant au moment où l'écart de hauteur entre les deux sommiers (10, 12) de la presse à platine (5) devient inférieur à l'épaisseur de la barre de pinces (8), et ce d'un délai égal à la somme du délai "Dcommut" de réaction du commutateur (34) et du délai "Dfrein" de freinage du sommier inférieur (10) mobile jusqu'à arrêt complet de celui-ci par son dispositif de freinage d'urgence (36).

4. Dispositif de sécurité selon la revendication 3, caractérisé en ce que le commutateur (34) et le dispositif de freinage (36) du sommier inférieur (10) mobile sont réalisés de telle sorte que la somme de leurs délais de réaction "Dcommut + Dfrein" soit inférieure au délai compris entre les instants "θecra - θsor", "θsor" correspondant à l'instant angulaire normal de sortie de la barre de pinces (8) hors de la presse à platine (5).

## Claims

1. Safety device for preventing crushing of a gripper bar in a platen press (5) for processing plate-like workpieces, this platen press (5) comprising a fixed upper beam (12) and a movable lower beam (10) raised in cyclic manner by a drive device (15-20), this safety device comprising an emergency-situation pick-up (30) consisting of a comparator circuit (32) electrically linked to a scanning cell, said comparator circuit (32) also receives an indication of the position of the movable lower beam (10), said comparator circuit (32) being arranged to trip a switch (34) of an emergency braking device (36) installed in the drive (20) of the movable lower beam (10), characterized by the fact that the cell is a direct scanning cell (30) detecting the travel of the gripper bar (8) at the outlet of the press (5), so that the switch (34) trips in the case of non-detection of the travel of the gripper bar (8) at the outlet of the press (5), by the direct scanning cell (30), at the moment when the movable lower beam (10) is in a predetermined position, moving towards its top dead centre (PMH).

2. Safety device according to claim 1, characterized by the fact that the direct scanning cell (30) is an inductive pick-up of the proximity of a metal mass.

3. Safety device according to claim 1, charaterized by the fact that the direct scanning cell (30) is positioned at the normal place where the gripper bar (8) is travelling at the angular instant "θlect" preceding the angular instant "θecra" corresponding to the moment when the difference in height between the two beams (10, 12) of the platen press (5) becomes less than the thickness of the gripper bar (8), by a time equal to the reaction time "Dcommut" of the switch (34) plus the time "Dfrein" for braking the movable lower beam (10) until it has been completely stopped by its emergency braking device (36).

4. Safety device according to claim 3, characterized by the fact that the switch (34) and the device (36) for braking the movable lower beam (10) are constructed so that the total of their reaction times "Dcommut + Dfrein" is less than the time between the instants "θecra - θsor", "θsor" corresponding to the normal angular instant when the gripper bar (8) comes out of the platen press (5).

## Patentansprüche

1. Sicherheitsvorrichtung zur Vermeidung der Zerquetschung einer Greiferstange (8) in einer Tiegelpresse (5) zur Verarbeitung von plattenartigen Werkstücken, welch Tiegelpresse (5) einen oberen festen Tiegel (12) und einen unteren beweglichen Tiegel (10), welcher durch eine Antriebsvorrichtung (15 - 20) auf zyklische Weise gehoben wird, umfasst, wobei diese Sicherheitsvorrichtung eine Notfallerkennung umfasst, welche aus einer Vergleichsschaltung (32) besteht, die elektrisch mit einer Abtastzelle verbunden ist, wobei diese Vergleichsschaltung (32) ausserdem eine Stellungsangabe des beweglichen unteren Tiegels (10) erhält, und so eingerichtet ist, um einen Schalter (34) einer Notbremsvorrichtung (36), welche im Antrieb (20) des beweglichen unteren Tiegels (10) angeordnet ist, umzuschalten, dadurch gekennzeichnet, dass die Zelle eine direkte Abtastzelle (30) ist, welche den Durchgang der Greiferstange (8) auf der Höhe des Ausgangs der Presse (5) erfasst, so dass der Schalter (34) bei Nicht-Erfassung des Durchgangs der Greiferstange (8) beim Ausgang der Presse (5), durch die direkte Abtastzelle (30), in dem Moment umschaltet, wenn sich der untere bewegliche Tiegel (10) bei seiner Bewegung gegen seinen oberen Totpunkt (PMH) in einer vorbestimmten Stellung befindet.

2. Sicherheitsvorrichtung gemäss Patentanspruch 1, dadurch gekennzeichnet, dass die direkte Abtastzelle (30) ein induktiver Näherungsschalter ist, welcher die Präsenz einer Metallmasse erkennt.

3. Sicherheitsvorrichtung gemäss Patentanspruch 1, dadurch gekennzeichnet, dass die direkte Abtastzelle (30) an der Stelle positioniert ist, wo die Greiferstange (8) im Winkelmoment "θlect" durchgeht, dem Winkelmoment "θecra" vorhergehend, welcher dem Moment entspricht, wenn der Höhenunterschied zwischen den zwei Tiegeln (10, 12) der Tiegelstanze (5) kleiner wird als die Dicke der Greiferstange (8), und dies mit einer Zeitspanne, die gleich ist wie das Total der Reaktionszeit des Schalters (34) "Dcommut" plus die Bremszeit "Dfrein" des unteren beweglichen Tiegels (10) bis dieser von seiner Notbremsvorrichtung (36) vollständig zum Stillstand gebracht wird.

4. Sicherheitsvorrichtung gemäss Patentanspruch 3, dadurch gekennzeichnet, dass der Schalter (34) und die Bremsvorrichtung (36) des beweglichen unteren Tiegels (10) so konstruiert sind, dass das Total ihrer Reaktionszeiten "Dcommut + Dfrein" kleiner ist, als die Zeitspanne zwischen den Momenten "θecra - θsor", "θsor", welche dem normalen Winkelmoment entspricht, wenn die Greiferstange (8) aus der Tiegelpresse (5) austritt.
